# EUROPEAN PATENT APPLICATION

(11) **EP 4 672 044 A1**
(43) Date of publication of application: **31.12.2025**
(21) Application number: 24185005.6
(22) Date of filing: 27.06.2024
(51) Int. Cl.: G06F 21/32, H04L 9/40, H04L 9/32

(54) **METHOD OF AUTHENTICATING A USER FOR ACCESSING A DATA OBJECT, AS WELL AS RESPECTIVE SECURITY PROGRAM, COMPUTER-READABLE DATA CARRIER, SECURITY APPLICATION, USER DEVICE, AND SERVER DEVICE**

(71) Applicant: Giesecke+Devrient ePayments GmbH, 81677 München (DE)
(72) Inventor: Kurande, Hitendra, 110 020 New Delhi (IN); Jamadagni, Anand, 110 020 New Delhi (IN); Bhatt, Vikas, 110 020 New Delhi (IN); Kalyani, Shweta, 110 020 New Delhi (IN)
(74) Representative: LKGLOBAL Partnerschaftsgesellschaft mbB

(57) **Abstract**

A method, a security program (10), a computer-readable data carrier (12), a security application (6), a user device (3), and a server device (4) for securing a data object (D), in particular for communications between a first participant (A) and a second participant (B), are provided, the method comprising the steps of providing at least two authentication objects (H) for authenticating the user (U); and configuring at least one of the at least two authentication objects (H) as an impairment dependent authentication option (O) to be used for the authentication in case of an impairment of the user (U).

## Description

### Technical Field

The present disclosure relates to the field of data security and communication. In particular, the present disclosure relates to a method of authenticating a user for accessing a data object with a user device, in particular in communications between a first participant and a second participant, to a security program for securing communications, in telecommunication networks, such as the internet, to a computer-readable data carrier, a security application for securing communications between communication partners, in particular in telecommunication networks, such as the internet, to a user device, in particular a terminal device for secure communications between participants, in particular as communication partners in telecommunication networks, such as the internet, and to a server device, in particular a security server providing a secure location for securing communications between participants, in particular communication partners in telecommunication networks, such as the internet.

### Background of the Invention

The need for securing data objects against unauthorised access is omnipresent in present private and professional communication environments. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. According to the state of the art, data objects are commonly protected by passwords and/or pins, which can be defined permanently by a user or altered dynamically, for example, as one-time passwords (OTP). One for improving the security of data objects as known from the prior art is seen in using biometric features, such as fingerprints, iris scans, natural language recognition, etc., for authenticating at user, which in turn bring new challenges in verifying authenticity of such features.

CN 116599776, for example, relates to a fingerprint sensing system and a method of the fingerprint sensing system of enabling authentication of a user based on fingerprint data captured by a fingerprint sensor of the fingerprint sensing system. In an aspect of the invention, a method of a fingerprint sensing system of enabling authentication of a user based on fingerprint data captured by a fingerprint sensor of the fingerprint sensing system is provided. The method comprises capturing at least one image of a fingerprint of a user's finger contacting the fingerprint sensor, acquiring a stored image comprising impairment data caused by impairments that the fingerprint sensor is subjected to, extracting fingerprint feature data from the captured at least one image, extracting impairment feature data from the acquired image, and comparing at least a subset of the extracted fingerprint feature data to at least a subset of the extracted impairment feature data of the acquired image, and if there is a match the user is not authenticated.

CA 3 048 208 A1 describes a system and method for multilingual authentication access to a communication system in a controlled environment is disclosed. The system includes a communication subsystem that connects a communication between a first communication device and a second communication device, wherein one of the first communication device or the second communication device is used by the inmate of the correctional system. The system also includes a profile subsystem configured to determine profile information of a party associated with the first communication device. The system further includes an authentication subsystem that provides one or more challenge questions to the first communication device based on the profile information, receives at least one response to the one or more challenge questions from the first communication device, and authorizes connection of the communication between the first communication device and the second communication device based on the at least one response.

WO 2016 129858 A1 relates to an electronic device use control system and method using a code input scheme, and to a security system and device using an additional code, and a method therefor. In using a function or service of an electronic device such as a smart phone, a mobile device, a computer, a financial terminal, a door electronic device, and a service providing server, using the code input scheme in which additional codes having an additional function are combined, the system, device, and method may: control an additional function for user convenience; achieve a normal operation, using a disguised control code including an additional code having an additional function for pretending to be an authentication code in a state of exposure to a counterpart wherein a requirement of the counterpart is progressed simultaneously while preventing the counterpart from recognizing the progressing; and cope with an additional emergency or normal situation.

WO 2004 072899 A1 describes an unauthorized person judgment processing, wherein an unauthorized person judgment section reads from an image storage section the image data indicating an authentication object image to which a stripe pattern is projected and extracts the stripe pattern on the face region of the image indicated by the image data which has been read in. Next, it is judged whether the stripes on the face region in the image are straight lines. If the stripes are straight lines, it is possible to judge that the authentication object is a plane-shaped object such as a photograph and an image display device and not a person himself/herself, i.e., an unauthorized person. On the other hand, if the stripes are not straight lines, the authentication object is a three-dimensional object having convex and concave portions and it is judged that the object can be an authorized person himself/herself and not an unauthorized person.

Methods and systems known from the prior art for securing data objects cannot fully satisfy the needs of modern communication environments. In particular, current authentication processes are not considering any mental and/or physical impairment of a user, such as a certain handicap, injury, or alike. Under certain circumstances, such as an impairment of the user, biometric, non-biometric, identity related and/or other static data, e.g., fingerprints, passwords, or PINs, might be cumbersome or even impossible to apply for authenticating the user.

### Summary of the Invention

It may be seen as an object underlying the present invention to provide improved flexibility for authenticating users and securing data objects. In particular, it may be seen as an object to provide a way to securely handle authentication for allowing a secure storage of data objects and/or exchange of data objects between communication participants via public networks, such as the Internet, or in private networks, while considering an impairment of the user. These and further objects are at least partly achieved by the subject-matter of the independent claims.

According to an aspect, a method of authenticating a user for accessing a data object with a user device is provided, in particular in communications between a first participant and a second participant, the method comprising the steps of providing at least two authentication objects for authenticating the user; and configuring at least one of the at least two authentication objects as an impairment dependent authentication option to be used for the authentication in case of an impairment of the user.

According to an aspect, a security program for securing communications in telecommunication networks, such as the internet, is provided, wherein the security program comprises instructions which, when the security program is executed by a security application, cause the security application to carry out a corresponding method.

According to an aspect, a computer-readable data carrier is provided, having stored thereon a corresponding security program.

According to an aspect, a security application for securing communications between communication partners, in particular in telecommunication networks, such as the internet, is provided, wherein the security application is configured to carry out a corresponding method, comprises a corresponding security program and/or comprises a corresponding computer-readable data carrier.

According to an aspect, a user device, in particular a terminal device for secure communications between participants, for example, as communication partners in telecommunication networks, such as the internet, is provided, wherein the user device is configured to carry out a corresponding method comprises a corresponding security application.

According to an aspect, a server device, in particular a security server providing a secure location for securing communications between participants, for example, communication partners in telecommunication networks, such as the internet, is provided, wherein the server device is configured to carry out a corresponding method and/or comprises a corresponding security application.

The data object can be configured to enable a secure connection and/or restricted access to a respective service. A respective framework can be used for securing any kind of data storage or transmission. Respective security mechanisms involving an impairment dependent authentication option may be implemented in existing security methods.

The proposed solution provides enhanced flexibility and options for users with impairments or potential impairments. The users can preconfigure their impairment dependent authentication options to allow a preferably comfortable, yet secure access to data objects, including data services, data accesses, transactions, or alike. Thereby, the proposed solution has the decisive advantage over the prior art that uses with impairments are not hindered or even excluded from using certain data objects or services.

Further developments can be derived from the dependent claims and from the following description. Features described with reference to a computing device, such as a user device, and/or server device, and components thereof may be implemented as method steps, or vice versa. Therefore, the description provided in the context of the user device, and/or server device, and their components apply in an analogous manner also to respective methods. In particular, features and functions of the user device, and/or server device, and their components may be implemented as method steps which in turn may be implemented as respective device features or functions.

According to a possible embodiment of the method, the method further comprises the step of querying the user regarding an impairment status of the user when the user demands access to the data object. For example, the user may be queried and/or asked any time regarding the impairment, if the user demands access to the data object. This may help to facilitate operation of respective user devices providing access to data objects.

According to a possible embodiment of the method, the method further comprises the step of offering the impairment dependent authentication option based on an impairment status selected by the user. For example, the user may select a preconfigured impairment dependent authentication option if an expected impairment is at hand. This helps in further facilitating operation of user devices and access to data objects if an impairment is at hand.

According to a possible embodiment of the method, the user is being allowed to trigger an impairment notification for selecting the impairment dependent authentication option for authentication. The impairment notification can help to notify a process in a user device and/or service provider, for example, a server device, regarding the impairment status of the user. This helps to further facilitate communications and operations in case of an impairment of the user.

According to a possible embodiment of the method, the method further comprises the step of storing the configuration of the at least one of the at least two authentication objects to be used for the authentication in case of the impairment at a secure location, such as a secure server. Saving information regarding the impairment dependent authentication option and/or the impairment status itself at a secure location can help to uphold data privacy in case of an impairment. This further helps to protect the user if an impairment is at hand or expected.

According to a possible embodiment of the method, the at least one authentication object configured for the impairment dependent authentication option involves a biometrics feature, a face recognition feature, an iris feature, a security certificate and/or a security key. For example, the authentication options may be associated to a specific type of impairment. Thereby, a user can select the impairment dependent authentication option which is most suitable for a certain impairment and any limitations which it may bring.

According to a possible embodiment of the method, the method further comprises the step of separately encrypting the data object by means of the at least two authentication objects. For example, the authentication object used according to the impairment dependent authentication option can be used separately and/or additionally with respect to other authentication objects. Thereby, an overall security of the authentication can be kept very high.

According to a possible embodiment of the method, a transformation function involving the at least two authentication objects embeds the data object to create a secure object. The transformation function may use the authentication object configured for the impairment dependent authentication option in parallel and/or in addition to any other authentication object. This further helps in providing very high security.

According to a possible embodiment of the method, the method further comprises the step of discarding and/or banning the impairment dependent authentication option from further usage by the participants after the end of an impairment time period. For example, the impairment time period may be (pre-)set and/or adjusted according to the expected or actual impairment of the user. Thereby, certain authentication objects configured to be used according to the impairment dependent authentication option may be allowed for a limited time span. This can help to further improve security of a respective impairment dependent authentication option.

According to a possible embodiment of the method, the impairment dependent authentication option is being configured for use according to a situational impairment, temporary impairment and/or permanent impairment of the user. Situational impairment can be at hand if the user is in a situation with limited capabilities, such as when the user has to fulfil other additional functions or activities during the operation of a user device, e.g., when the user is carrying a baby, conducting a vehicle, or alike. A temporary impairment can be at hand, if a user has certain temporary injury, for example, a broken or burnt finger, or alike. The permanent impairment can be at hand, when the user is permanently or handicapped. Thus, configuring the impairment dependent authentication option according to a situational impairment, temporary impairment and/or permanent impairment of the user provides further flexibility and comfort, if not accessibility, for the user.

### Brief Description of the Drawings

- Fig. 1: is a schematic illustration of a security system configured to carry out a method according to the present invention.
- Fig. 2: is a schematic illustration of exemplary types of impairment of users.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a review of the illustrations together with a review of the detailed description that follows.

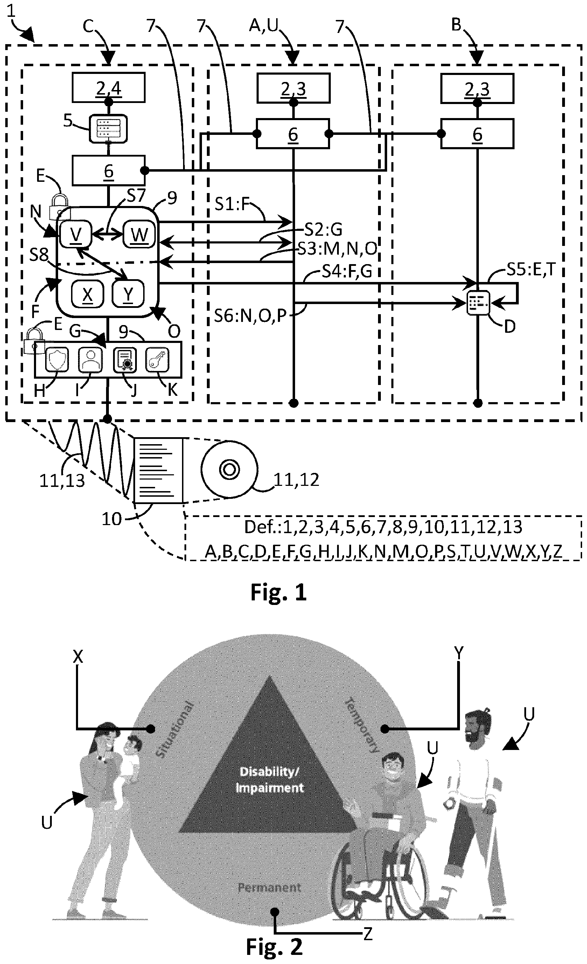

Fig. 1 shows a schematic illustration of a framework in the form of a security system 1 configured to carry out a method according to the present invention. The security system 1 involves a first participant A and a second participant B. Furthermore, the security system 1 may involve a trusted entity C. The first participant A, second participant B, and/or trusted entity C may each operate a computing device 2 taking part in and/or as a part of security system 1. The first participant A and/or the second participant B can each operate the computing device 2 configured as a user device 3, such as a mobile device, terminal device, client device and/or any computing device capable of handling a data object D. The trusted entity may operate the computing device 2 in the form of a server device 4. The server device 3 of the vendor trusted entity C may comprise a hardware security module 5 which can be configured to store, manage, and/or provide any data element or component described herein.

The security system further comprises a security application 6 which may be provided to each of the computing devices 2 and may provide a communication interface 7 enabling communications between the computing devices 2. The security application 6 may be provided in the form of a software plug-in for web browsers and/or email clients, or alike, and therefore can be provided as a locally installed program being executed on the computing devices 2 allowing them to communicate through the communication interface 7 via respective communication lines, such as any kind of wired and/or wireless data connections and transmission means (not shown). The communication interface 7 may be provided as a web interface and/or application programming interface (API), or alike.

The trusted entity C may operate a secure database 9 on the server device 4, for example, in and/or protected by the hardware security module 5, protected by respective encryption E. The secure database 9 may provide a secure location to securely keep a security framework F and/or a security arrangement G. The security framework F includes normal authentication options N and impairment dependent authentication options O according to a normal status V, W and impairment status X, Y of a user U (see Fig 2), for example, acting as participant A. The security arrangement G may comprise authentication objects H, which may involve, be linked to, and/or comprise biometric features I, security certificates J, and/or security keys K. The biometric features may comprise any face recognition feature, iris feature, as fingerprint feature, voice recognition feature, or alike.

In any of the embodiments of the security system 1 as described herein, in particular the computing devices 2, can be configured to execute a computer program in the form of a security program 10. A computer-readable data carrier 11 can have stored thereon the security program 10 and may take the form of a computer-readable medium 12 and/or data carrier signal 13. When carrying out the security program 10, the security system 1 and any components thereof communicate as specified in the security program 10. Parameters associated with and/or underlying the security system 1, any of the components thereof and/or any steps S carried out thereby, can be defined in and/or by the security program 10.

A data exchange taking place between the first participant A and the second participant B may have several steps S. In a first step S1, the security framework F along with the normal authentication options N and the impairment dependent authentication options O can be provided to the user U for configuration and/or selection. In a second step S2, the user U and/or the trusted entity C can populate the security framework H with authentication objects H, for example, by linking them to, and/or providing them with respective biometric features I, security certificates J, and/or security keys K, for setting up the security arrangement G. In a third step, the user U may configure the authentication options N, O, in selecting which of them should be used as the normal authentication option N and/or as the impairment dependent authentication option O based on respective normal statuses V, W and/or impairment statuses X, Y, Z, of the user U, possibly by defining, configuring and/or selecting an impairment notification M that the user U can use for enabling at least one of the impairment statuses X, Y, Z.

In a fourths step S4, the security framework F, authentication objects H, and/or the security arrangement G can be provided to the second participant B, for example, by means of the security application 6 and/or communication interface 7, and possibly additionally protected by encryption E through an additional authentication object H. The second participant B may be any human and/or machine entity providing certain products and services that demand security and protection, such as banks where the computer devices 2 can be configured as bank severs providing bank accounts, as well as related services involving debit cards, credit cards, involved in financial transactions, or alike, or government services with respective computer devices 2 configured as government servers allowing to set up access to user data involving tax data, contact data, or alike, or health service providers, including health insurance companies, managing and processing health data of the user U the respective computer devices 2 configured as database servers, or alike, etc. In a firth step S5, the second participant B can provide a protection and/or encryption E to a data object D by means of the security framework F, authentication objects H, and/or the security arrangement G, for example, by using transformation functions T for protection and/or encryption E based on the authentication objects H.

In a sixth step S6, the user can access the protected and/or encrypted data object D, for example, via the security application 6 and/or communication interface 7, by using the authentication objects H as configured for providing a normal authentication option N and/or impairment dependent authentication option O, respectively. In a seventh step S7, the user can select between normal authentication options N for accessing the data object D. In an eights step S8, the user U can select and/or enable one of the preconfigured impairment dependent authentication options O for accessing the data object D, possibly along with the definition an impairment time period P during which the selected impairment dependent authentication option O is deemed to be valid, based on the respective first, second and/or third impairment status X, Y, Z. For the selection and/or enablement, the user U can use the impairment notification M, such as a respective catchword and/or gesture, pin code, keyword, or alike, which may involve and/or serve as an authentication object H.

Fig. 2 shows a schematic illustration of exemplary types of impairment of users U. For example, the first impairment status X can relate to any situational disability, such as when the user U is occupied by a certain activity or process, for example, when carrying a baby, conducting a vehicle, operating a tool, or alike. The second impairment status Y may relate to a temporary impairment, for example, when the user U suffers from an injury and/or recovers from a medical treatment, or alike. The third impairment status Z may relate to a permanent disability, such as when the user U has lost a limb, as a certain organ defect, or alike.

### Reference Signs

- 1: security system
- 2: computing device
- 3: user device
- 4: server device
- 5: hardware security module
- 6: security application
- 7: communication interface
- 9: secure database
- 10: computer program / security program
- 11: computer-readable data carrier
- 12: computer-readable medium
- 13: data carrier signal

- A: first participant
- B: second participant
- C: trusted entity
- D: data object
- E: encryption
- F: security framework
- G: security arrangement
- H: authentication object
- I: biometric feature
- J: security certificate
- K: security key
- N: normal/standard authentication option
- O: impairment dependent authentication option
- P: impairment time period
- S: step
- T: transformation function
- U: user
- V: first normal status
- W: second normal status
- X: first impairment status /situational disability
- Y: second impairment status / temporary disability
- Z: third impairment status / permanent disability

- S1: provide framework
- S2: setup security arrangement
- S3: configure authentication options
- S4: provide security arrangement
- S5: protect/encrypt data object
- S6: access data object
- S7: select normal options
- S8: select impairment options

## Claims

1. A method of authenticating a user (U) for accessing a data object (D) with a user device (3), in particular in communications between a first participant (A) and a second participant (B), the method comprising the steps of
providing at least two authentication objects (H) for authenticating the user (U); and configuring at least one of the at least two authentication objects (H) as an impairment dependent authentication option (O) to be used for the authentication in case of an impairment of the user (U).

2. The method according to claim 1, further comprising the step of querying the user (U) regarding an impairment status (I) of the user (U) when the user demands access to the data object (D).

3. The method according to claim 1 or 2, further comprising the step of offering the impairment dependent authentication option (O) based on an impairment status (X, Y, Z) selected by the user (U)

4. The method according to at least one of claims 1 to 3, wherein the user (U) is being allowed to trigger an impairment notification (M) for selecting the impairment dependent authentication option (O) for authentication.

5. The method according to at least one of claim 1 to 4, further comprising the step of storing the configuration of the at least one of the at least two authentication objects (H) to be used for the authentication in case of the impairment at a secure location, such as a secure server (4).

6. The method according to at least one of claims 1 to 5, wherein the at least one authentication object (H) configured for the impairment dependent authentication option (O) involves a biometrics feature (I), a face recognition feature, an iris feature, a security certificate (J) and/or a security key (K).

7. The method according to at least one of claims 1 to 6, further comprising the step of separately encrypting the data object (D) by means of the at least two authentication objects (H).

8. The method according to at least one of claims 1 to 7, a transformation function (T) involving the at least two authentication objects (H) embeds the data object (D) to create a secure object.

9. The method of claim 1, further comprising the step of discarding and/or banning the impairment dependent authentication option (O) from further usage by the participants (A, B) after the end of an impairment time period (P).

10. The method according to at least one of claims 1 to 9, wherein the impairment dependent authentication option (O) is being configured for use according to a situational impairment (X), temporary impairment (Y) and/or permanent impairment (Z) of the user (U).

11. Security program (10) for securing communications in telecommunication networks, such as the internet, wherein the security program (10) comprises instructions which, when the security program (10) is executed by a security application (6), cause the security application (6) to carry out a method of at least one of claims 1 to 10.

12. Computer-readable data carrier (12) having stored thereon the security program (11) according to claim 11.

13. Security application (6) for securing communications between communication partners (A, B), in particular in telecommunication networks, such as the internet, wherein the security application (6) is configured to carry out a method of at least one of claims 1 to 10, comprises a security program (10) according to claim 11, and/or comprises a computer-readable data carrier (12) according to claim 12.

14. User device (3), in particular a terminal device for secure communications between participants (A, B), for example, as communication partners in telecommunication networks, such as the internet, wherein the user device (3) is configured to carry out a method according to at least one of claims 1 to 10 and/or comprises a security application (6) according to claim 13.

15. Server device (4), in particular a security server providing a secure location for securing communications between participants (A, B), for example, communication partners in telecommunication networks, such as the internet, wherein the server device (4) is configured to carry out a method according to at least one of claims 1 to 10 and/or comprises a security application (6) according to claim 13.
